# EUROPEAN PATENT SPECIFICATION

(11) **EP 3 705 753 B1**
(45) Date of publication and mention of the grant of the patent: **29.09.2021**
(21) Application number: 19211151.6
(22) Date of filing: 25.11.2019
(51) Int. Cl.: F16H 49/00, F16H 7/02, B64D 41/00

(54) **CONTINUOUSLY VARIABLE TRANSMISSION FOR RAM AIR TURBINES**
STUFENLOSES GETRIEBE FÜR STAULUFTTURBINEN
TRANSMISSION VARIABLE CONTINUE POUR TURBINES À AIR DYNAMIQUE

(30) Priority: 05.03.2019 US 201916292634
(43) Date of publication of application: 09.09.2020
(73) Proprietor: Hamilton Sundstrand Corporation, Charlotte, NC 28217-4578 (US)
(72) Inventor: LARSON, Michael E., Rockford, IL 61109 (US); KONICEK, Timothy Scott, Rockford, IL 61114 (US)
(74) Representative: Dehns

(56) References cited:
- EP-A1- 2 696 058
- GB-A- 987 032
- US-A1- 2010 133 813
- US-A1- 2014 263 824

## Description

### BACKGROUND

The subject matter disclosed herein generally relates to aircraft components, and more particularly to ram air turbines and transmissions thereof.

Aircraft may include power generation using turbines in main engines. However, as a safety feature, or for other reasons, alternate power device (e.g., supplementary or backup units) may be arranged on aircraft to supply power (e.g., electric and/or hydraulic) to components of the aircraft, when needed. For example, a ram air turbine is deployable to generate power when sufficient primary power generation is not available. The ram air turbine typically includes a turbine that is deployed into an airstream along (e.g., external to) the aircraft. Rotation of the turbine drives a generator and/or hydraulic pump. The generator and/or hydraulic pump can be mounted at a pivot point of the ram air turbine that is a distance from the turbine deployed within the airstream. Accordingly, a drive arrangement including a gearbox is utilized to transfer power from the turbine to the generator and/or hydraulic pump. The drive arrangement includes a gearbox that provides a desired speed and direction for driving the generator and/or hydraulic pump. Gears, shafts, and other drive components are constrained by limitations in the desired size, weight, and power generation of the ram air turbine.

### BRIEF DESCRIPTION

A power generation system for aircraft according to the present invention is described herein and defined in claim 1.

In addition to one or more of the features described above, or as an alternative, further embodiments of the power generation systems may include that the continuously variable transmission include a first drive shaft operably connected to the turbine and a second drive shaft operably connected to the power generator.

In addition to one or more of the features described above, or as an alternative, further embodiments of the power generation systems may include a first pulley operably connected to the first drive shaft and configured to be driven by rotation of the turbine, a second pulley operably connected to the second drive shaft, the second drive shaft operably connected to the power generator, and a drive element operably connecting the first pulley to the second pulley such that rotation of the first pulley causes rotation of the second pulley.

In addition to one or more of the features described above, or as an alternative, further embodiments of the power generation systems may include that at least one of the first pulley and the second pulley comprises two cones, wherein the drive element wraps about the two cones.

In addition to one or more of the features described above, or as an alternative, further embodiments of the power generation systems may include that one of the two cones is fixedly connected to a respective drive shaft and the other of the two cones is movable along the respective drive shaft.

In addition to one or more of the features described above, or as an alternative, further embodiments of the power generation systems may include that the drive element is one of an endless chain and a belt.

In addition to one or more of the features described above, or as an alternative, further embodiments of the power generation systems may include that the power generator is an electric power generator.

In addition to one or more of the features described above, or as an alternative, further embodiments of the power generation systems may include that the power generator is a hydraulic pump.

In addition to one or more of the features described above, or as an alternative, further embodiments of the power generation systems may include that the power generator includes an electric power generator and a hydraulic power generator.

In addition to one or more of the features described above, or as an alternative, further embodiments of the power generation systems may include that the at least one aircraft component comprises a hydraulic component of the aircraft.

In addition to one or more of the features described above, or as an alternative, further embodiments of the power generation systems may include that the at least one aircraft component comprises an electronic component of the aircraft.

According to some embodiments, aircraft are provided. The aircraft include at least one aircraft component and a ram air turbine assembly configured to provide power to the at least one aircraft component, wherein at least a portion of the ram air turbine assembly is deployable between a stowed position and a deployed position external to the aircraft. The ram air turbine assembly include a turbine, wherein the turbine is positioned in an airstream external to the aircraft when in the deployed position, a power generator operably connected to the turbine, and a continuously variable transmission arranged between the turbine and the power generator, the continuously variable transmission configured to receive an input rotational speed from the turbine and output a constant output rotation speed to enable power generation at the power generator.

In addition to one or more of the features described above, or as an alternative, further embodiments of the aircraft may include that the continuously variable transmission includes a first drive shaft operably connected to the turbine and a second drive shaft operably connected to the power generator.

In addition to one or more of the features described above, or as an alternative, further embodiments of the aircraft may include a first pulley operably connected to the first drive shaft and configured to be driven by rotation of the turbine, a second pulley operably connected to the second drive shaft, the second drive shaft operably connected to the power generator, and a drive element operably connecting the first pulley to the second pulley such that rotation of the first pulley causes rotation of the second pulley.

In addition to one or more of the features described above, or as an alternative, further embodiments of the aircraft may include that the drive element is one of an endless chain and a belt.

In addition to one or more of the features described above, or as an alternative, further embodiments of the aircraft may include that the power generator is an electric power generator.

In addition to one or more of the features described above, or as an alternative, further embodiments of the aircraft may include that the power generator is a hydraulic pump.

In addition to one or more of the features described above, or as an alternative, further embodiments of the aircraft may include that the power generator includes an electric power generator and a hydraulic power generator.

In addition to one or more of the features described above, or as an alternative, further embodiments of the aircraft may include that the at least one aircraft component comprises a hydraulic component of the aircraft.

In addition to one or more of the features described above, or as an alternative, further embodiments of the aircraft may include that the at least one aircraft component comprises an electronic component of the aircraft.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be illustrative and explanatory in nature and non-limiting.

GB987032 discloses a power generation system for an aircraft, the power generation system comprising: at least one aircraft component; and a ram air turbine assembly configured to provide power to the at least one aircraft component, where the ram air turbine assembly comprises:a turbine; a power generator operably connected to the turbine; and a transmission arranged between the turbine and the power generator. The turbine assembly comprises blades that are adjustable to maintain the power generator at a substantially constant rotational speed.

### BRIEF DESCRIPTION OF THE DRAWINGS

The following descriptions should not be considered limiting in any way. With reference to the accompanying drawings, like elements are numbered alike:
FIG. 1 is a schematic illustration of an aircraft that may employ embodiments of the present disclosure;
FIG. 2 is a schematic illustration of a ram air turbine assembly that may employ embodiments of the present disclosure;
FIG. 3 is a schematic illustration of elements a continuously variable transmission in accordance with an embodiment of the present disclosure;
FIG. 4 is a schematic illustration of a ram air turbine assembly in accordance with an embodiment of the present disclosure;
FIG. 5 is a schematic illustration of a ram air turbine assembly in accordance with an embodiment of the present disclosure; and
FIG. 6 is a schematic illustration of a ram air turbine assembly in accordance with an embodiment of the present disclosure.

### DETAILED DESCRIPTION

A detailed description of one or more embodiments of the disclosed apparatus and method are presented herein by way of exemplification and not limitation with reference to the Figures.

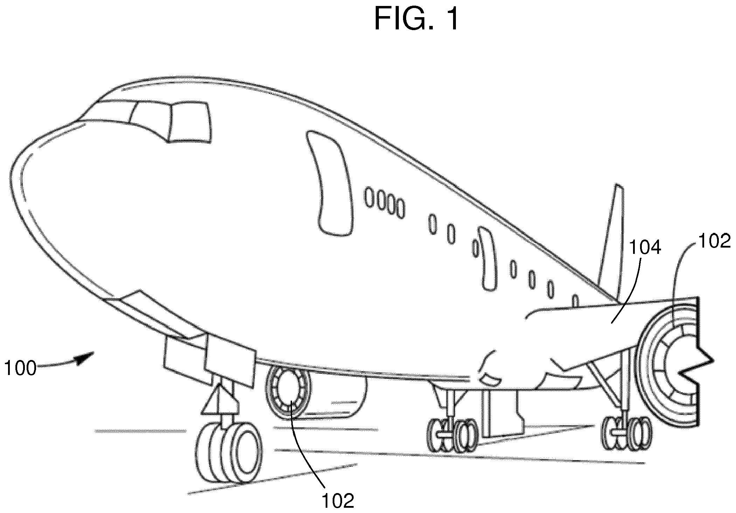

As shown in FIG. 1, an aircraft 100 typically includes one or more engines 102 for driving flight and powering the aircraft. The engines 102 are typically mounted on wings 104 of the aircraft 100, but may be located at other locations depending on the specific aircraft configuration. In some aircraft, the engine(s) may be tail mounted, or housed within the body of the aircraft, or otherwise arranged as will be appreciated by those of skill in the art.

Each engine 102 of the aircraft 100, regardless of location, may include one or more attached or connected generators, as appreciated by those of skill in the art. The generators may provide electrical power to various components of aircraft, as will be appreciated by those of skill in the art. In some configurations, the generators may be operably connected to an output shaft of the engine which drives a stator/rotor to generate electricity. In other configurations, a shaft from the engine may interface to a gearbox, and generators may be mounted, as an accessory, to the gearbox.

In addition to the power generated by the traditional or main engines (i.e., engines 102), additional power generation systems may be arranged on an aircraft. One type of such alternative, backup, or supplemental power generation may be a ram air turbine. The ram air turbine may be located in a nose portion of the aircraft, or at some other location, as will be appreciated by those of skill in the art (e.g., wing, wing-to-body fairing, etc.).

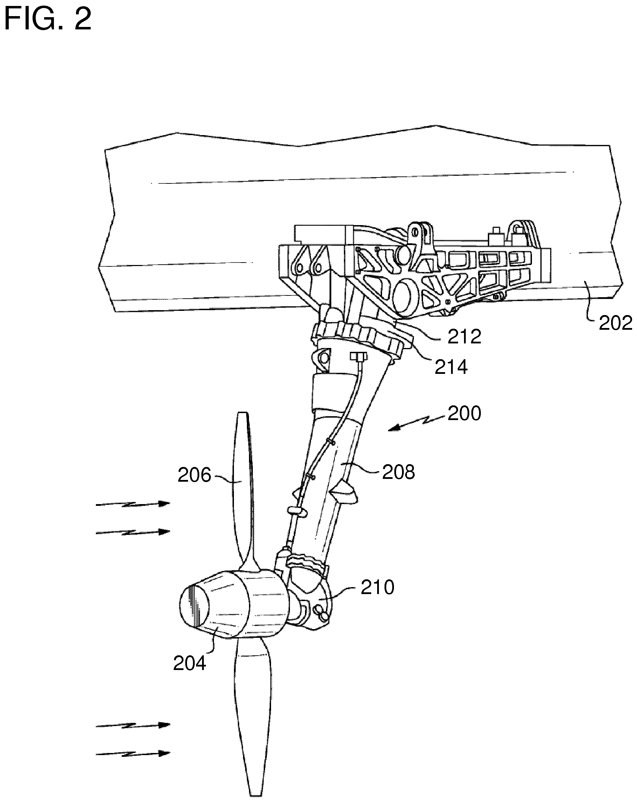

Referring to FIG. 2, a ram air turbine assembly 200 is illustrative shown. The ram air turbine assembly 200 is movable between a stowed position within an aircraft 202 (e.g., a nose or other part of the fuselage) and a deployed position. The deployed position is illustratively shown in FIG. 2. The ram air turbine assembly 200 includes a turbine 204 with airfoils 206 (e.g., blades) that rotate responsive to airflow. The turbine 204 is suspended on a strut 208 that moves between the deployed and stowed positions. The strut 208 supports a gearbox 210 that transmits power from the turbine 204 to a generator 212 within a generator housing 214. The strut 208 is attached to the generator housing 214 within which the generator 212 is supported. The example, illustrative ram air turbine assembly 200 shown in FIG. 2 includes the generator 212. However, ram air turbine assemblies of the present disclosure could also be utilized to drive a hydraulic pump or other power generator or conversion device, as will be appreciated by those of skill in the art.

For example, in some embodiments, the ram air turbine can include a hydraulic power conversion device. Hydraulic power conversion device may, for example, be capable of converting rotation from the turbine into hydraulic pressure and flow. The hydraulic power conversion device can include a hydraulic pump and coupled to one or more hoses capable of transmitting unpressurized hydraulic fluid to the hydraulic power conversion device and pressurized hydraulic fluid from the hydraulic power conversion device to hydraulic components of aircraft, as will be readily appreciated by those of skill in the art. Ram air turbine may further comprise, for example, an electrical power conversion device. The electrical power conversion device is configured to convert rotation from the turbine into electrical energy (e.g., with a generator). Further, in some embodiments, a combination of both hydraulic and electric power generation/conversion can be implemented, without departing from the scope of the present disclosure.

The gearbox (e.g., gearbox 210) of the ram air turbine assembly (e.g., ram air turbine assembly 200) is configured to receive and transmit rotation from a turbine shaft to a drive shaft. For example, the gearbox may be configured to receive the turbine shaft which rotates at a turbine rotational velocity and convert the rotation to a different speed drive shaft rotational velocity (e.g., higher or lower than the turbine rotational velocity). The drive shaft may be operably connected to the hydraulic/electrical conversion devices and drive operation thereof. Operable connections between the turbine and a power converter (or generator) may be a direct connection, a gearbox (as shown), or some other connection. For example, in a typical arrangement, a gear set may be provided within a gearbox to provide increased or decreased rotational speeds, depending on the specific application.

In one non-limiting example of a conventional ram air turbine assembly, a fluid filled, right-angle gearbox is configured to increase a turbine shaft speed into a generator (electrical) and/or pump (hydraulic). Typical gear ratios range from 1:1 to 1:2.5. As the turbine spins up, the full driveline spins with it. This adds inertia to the driveline which increases start time (especially at cold conditions where driveline bearing tare losses and gearbox fluid viscous losses are the highest). Additionally, because the gear ratio is fixed, the governing capability of the system may be limited to the turbine. Further, a fluid filled gearbox may be prone to leakage and thus may require periodic maintenance checks and/or inspection.

Embodiments of the present disclosure are directed to replacing the traditional gear set with a continuously variable transmission. In some embodiments that require an angled gearbox, a continuously variable transmission can be added. A continuously variable transmission can provide a secondary governing feature to the ram air turbine system. As such, tighter output shaft speed ranges and/or control may be achieved. For example, for electric ram air turbine systems, a tighter (i.e., narrower) frequency band may be achieved, thus enabling a more controlled power supply from the ram air turbine system to electrical systems of an aircraft. In some embodiments, although inclusion of a continuously variable transmission within a ram air turbine system may increase the system weight, such weight increase at the transmission may be offset by electrical devices on the aircraft by being able to design for narrower frequency band operation.

In accordance with some embodiments, a flyweight engaged continuously variable transmission is employed within a ram air turbine assembly. In some such embodiments, the continuously variable transmission will include two pulleys coupled by a belt or chain (e.g., "V" pulleys). As noted, the continuously variable transmission could replace the gearbox or may be added to a geared system (e.g., dependent upon the layout of the ram air turbine assembly). In addition, in some embodiments, a clutch can be added to one of the pulleys to allow engagement to occur at a certain speed to aid turbine start-up. The clutch may be configured to engage when the turbine approaches a low end of a governing range (e.g., within 10%). Such configuration would allow for the turbine to spin up relatively quickly by reducing the driveline inertia and tare losses.

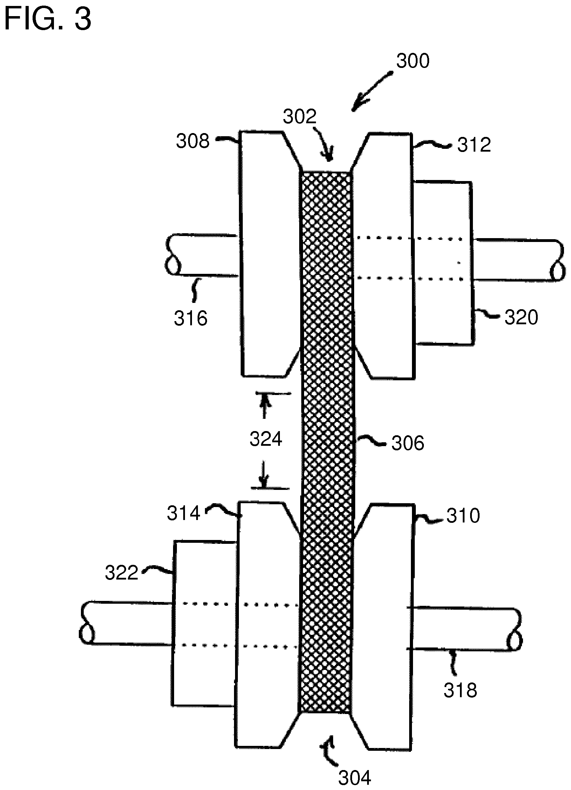

Referring to FIG. 3, a schematic illustration of a continuously variable transmission 300 in accordance with an embodiment of the present disclosure is shown. The continuously variable transmission 300 includes a pair of friction pulleys 302, 304 coupled by a drive element 306 (e.g., chain, belt, etc.). Each pulley 302, 304 includes a fixed cone 308, 310 and a moveable cone 312, 314, respectively. The moveable cone 312, 314 moves axially toward or away from the respective fixed cone 308, 308 along respective shafts 316, 318. The first movable cone 312 of the first friction pulley 302 may be moved or driven along the first shaft 316 by a first actuator 320 operably connected to the first movable cone 312. Similarly, the second movable cone 314 of the second friction pulley 304 may be moved or driven along the second shaft 318 by a second actuator 322 operably connected to the second movable cone 314. The actuators 320, 322, in some embodiments, may be flyweight actuators.

The motion of the movable cones 312, 314, caused by the actuators 320, 322, places the drive element 306 at varying radial positions on the pulleys 302, 304. The actuators 320, 322, in some embodiments, may be hydraulic, mechanical, or electromechanical. The changing radial position of the drive element 306 varies a transmission ratio between the first drive shaft 316, which may for example be the output of a gearbox driven by a ram air turbine, and the second drive shaft 318, which may, for example, be driven to power an electric generator. Between the two pulleys 302, 304 where the drive element 306 is connected to the pulleys 302, 304, the drive element 306 is in an unclamped space 324 (i.e., the drive element 306 is not in physical contact with the pulleys 302, 304). In the continuously variable transmission 300, the transmission ratio may vary without steps, continuously, between two predetermined limits (e.g., extents of the cones of the pulleys 302, 304). Although described with respect to FIG. 3 as a drive element 306, other connecting or operating structures can be employed between the pulleys of a continuously variable transmission of the present disclosure. For example, in some embodiments, the drive element 306 may be replaced by a belt or other similar component, as will be appreciated by those of skill in the art.

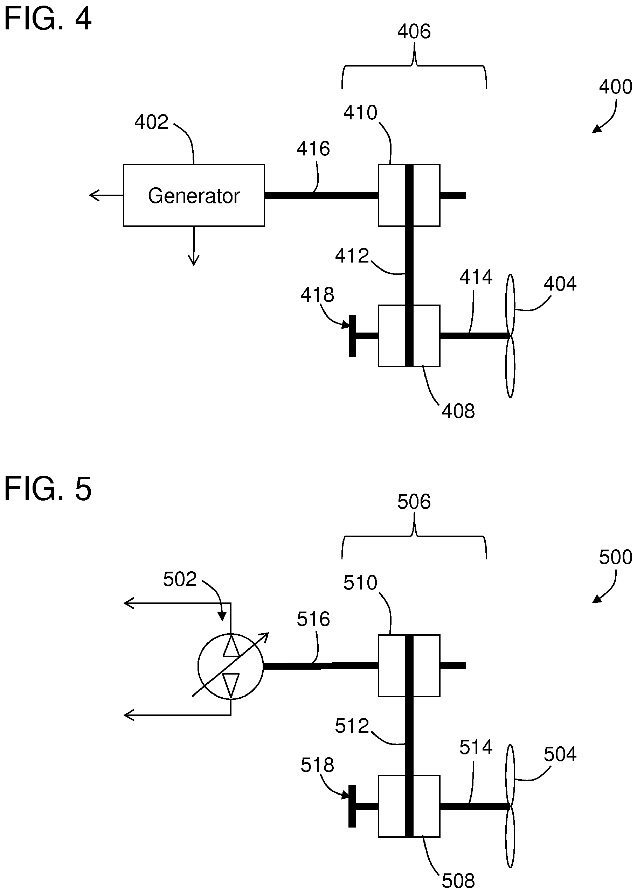

Turning now to FIG. 4, a schematic illustration of a ram air turbine assembly 400 in accordance with an embodiment of the present disclosure is shown. The ram air turbine assembly 400 is a turbine assembly for the generation of power for use on an aircraft, as shown and described above. The ram air turbine assembly 400, in this embodiment, is configured to generate electrical power using an electrical generator 402. The power generation at the electrical generator 402 is provided from rotation of a turbine 404, similar to that shown and described above. Located between the electrical generator 402 and the turbine 404 is a continuously variable transmission 406.

The continuously variable transmission 406 is operably configured between the electrical generator 402 and the turbine 404 to provide controlled rotational speed to enable an efficient generation of power at the electrical generator 402. As shown, the continuously variable transmission 406 includes a first pulley 408 and a second pulley 410 that are operably connected by a drive element 412 (e.g., a drive chain, drive belt, etc.). The first pulley 408 is connected to the turbine 404 by a first drive shaft 414 such that rotation of the turbine 404 will cause rotation of the first pulley 408. As the first pulley 408 is rotated, the drive element 412 will be driven to cause rotation of the second pulley 410. The second pulley 410 is operably connected to the electrical generator 402 by a second drive shaft 416. As will be appreciated by those of skill in the art, the first drive shaft 414 may be referred to as an input shaft of the continuously variable transmission 406 and the second drive shaft 416 may be referred to as an output shaft of the continuously variable transmission 406.

Each of the pulleys 408, 410 may be formed of two cones, as described above, with, for example, a movable cone arranged adjacent to a fixed cone. The drive element 412 may wrap about the cones of each of the pulleys 408, 410 to enable operable connection therebetween. The ratio between the first pulley 408 and the second pulley 410 may be adjusted or controlled. In some embodiments, actuators may be arranged in operable connection with the movable cones of the pulleys 408, 410. Further, in some embodiments, and as shown, the first pulley 408 and/or the first drive shaft 414 may be configured with a clutch 418. The clutch 418 may be configured to enable engagement of the first drive shaft 414 with the first pulley 408 at specific or predefined speeds. As such, the clutch 418 may enable improved start-up efficiency of the turbine (i.e., the driving of the first pulley 408 does not impact the initial rotation of the turbine 404).

The electrical generator 402 may be arranged in electrical communication with one or more components or systems of an aircraft. Accordingly, the electrical generator 402 can be arranged to provide electrical power to such components and/or systems, as will be appreciated by those of skill in the art. During operation of the ram air turbine assembly 400, the rotational speed of the turbine 404 may be variable, and thus the output from such turbine 404 may cause variability in the electrical power generated by the electrical generator 402. However, because of the inclusion of the continuously variable transmission 406 between the turbine 404 and the electrical generator 402, the rotational speed input by the turbine 404 at the first pulley 408 can be adjusted, regulated, and/or otherwise controlled such that the output from the second pulley 410 is constrained within a desired range, allowing for consistent and improved tolerance electrical power generation at the electrical generator 402.

For example, a typical electrical generation ram air turbine assembly may generate electrical power having a frequency tolerance of ±10%-20% or greater. This variance in the electrical frequency output requires the aircraft systems and devices powered by the ram air turbine to be arranged and configured to receive such variable frequency. Accordingly, additional electrical conditional elements may be required at the aircraft systems (e.g., electronic devices). The continuously variable transmission implementation according to the present invention enables reduction of the variability of electrical frequency to ±5% or less, thus reducing the amount of conditioning required of the electrical frequency output from the electrical generator.

Turning now to FIG. 5, a schematic illustration of a ram air turbine assembly 500 in accordance with an embodiment of the present disclosure is shown. The ram air turbine assembly 500 is a turbine assembly for the generation of power for use on an aircraft. The ram air turbine assembly 500, in this embodiment, is configured to generate hydraulic power using a hydraulic pump 502. The power generation at the hydraulic pump 502 is provided from rotation of a turbine 504, similar to that shown and described above. Located between the hydraulic pump 502 and the turbine 504 is a continuously variable transmission 506.

The continuously variable transmission 506 is operably configured between the hydraulic pump 502 and the turbine 504 to provide controlled rotational speed to enable an efficient generation of power at the hydraulic pump 502. As shown, the continuously variable transmission 506 includes a first pulley 508 and a second pulley 510 that are operably connected by a drive element 512 (e.g., a drive chain, drive belt, etc.). The first pulley 508 is connected to the turbine 504 by a first drive shaft 514 such that rotation of the turbine 504 will cause rotation of the first pulley 508. As the first pulley 508 is rotated, the drive element 512 will be driven to cause rotation of the second pulley 510. The second pulley 510 is operably connected to the hydraulic pump 502 by a second drive shaft 516. As will be appreciated by those of skill in the art, the first drive shaft 514 may be referred to as an input shaft of the continuously variable transmission 506 and the second drive shaft 516 may be referred to as an output shaft of the continuously variable transmission 506.

Each of the pulleys 508, 510 may be formed of two cones, as described above, with, for example, a movable cone arranged adjacent to a fixed cone. The drive element 512 may wrap about the cones of each of the pulleys 508, 510 to enable operable connection therebetween. The ratio between the first pulley 508 and the second pulley 510 may be adjusted or controlled. In some embodiments, actuators may be arranged in operable connection with the movable cones of the pulleys 508, 510. Further, in some embodiments, and as shown, the first pulley 508 and/or the first drive shaft 514 may be configured with a clutch 518. The clutch 518 may be configured to enable engagement of the first drive shaft 514 with the first pulley 508 at specific or predefined speeds. As such, the clutch 518 may enable improved start-up efficiency of the turbine (i.e., the driving of the first pulley 508 does not impact the initial rotation of the turbine 504).

The hydraulic pump 502 may be arranged in hydraulic communication with one or more components or systems of an aircraft. Accordingly, the hydraulic pump 502 can be arranged to provide hydraulic power to such components and/or systems, as will be appreciated by those of skill in the art. During operation of the ram air turbine assembly 500, the rotational speed of the turbine 504 may be variable, and thus the output from such turbine 504 may cause variability in the hydraulic power generated by the hydraulic pump 502. However, because of the inclusion of the continuously variable transmission 506 between the turbine 504 and the hydraulic pump 502, the rotational speed input by the turbine 504 at the first pulley 508 can be adjusted, regulated, and/or otherwise controlled such that the output from the second pulley 510 is constrained within a desired range, allowing for consistent and improved tolerance hydraulic power generation at the hydraulic pump 502. For example, with a variable displacement hydraulic pump, a relatively controlled or tight range of operating speeds may be advantageous. The displacement range (e.g., wobbler plate angle) could be smaller as compared to traditional system. Such reduced displacement range may allow for a smaller block size by reducing the piston stroke and/or diameter. This may, in turn, result in a better performing and more efficient pump.

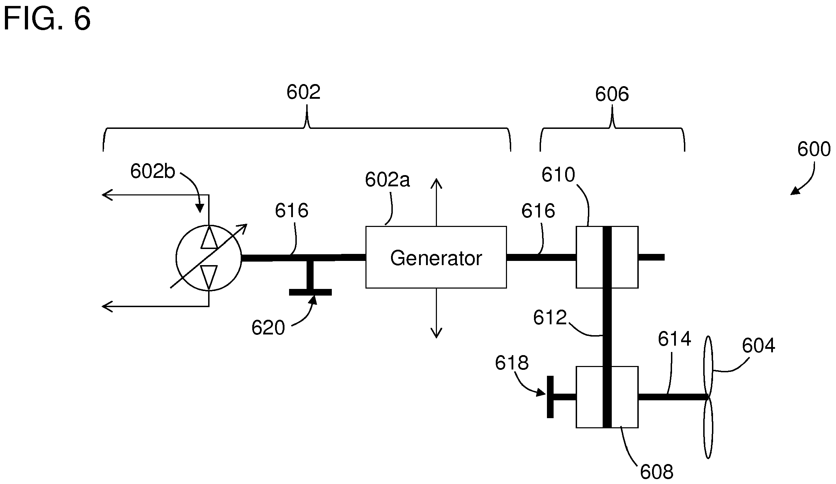

Turning now to FIG. 6, a schematic illustration of a ram air turbine assembly 600 in accordance with an embodiment of the present disclosure is shown. The ram air turbine assembly 600 is a turbine assembly for the generation of power for use on an aircraft. The ram air turbine assembly 600, in this embodiment, is configured to generate both electrical and hydraulic power using an electrical generator 602a and a hydraulic pump 602b (collectively power generators 602). The power generation at the power generators 602 is provided from rotation of a turbine 604, similar to that shown and described above. Located between the power generators 602 and the turbine 604 is a continuously variable transmission 606.

The continuously variable transmission 606 is operably configured between the power generators 602 and the turbine 604 to provide controlled rotational speed to enable an efficient generation of power at the power generators 602. As shown, the continuously variable transmission 606 includes a first pulley 608 and a second pulley 610 that are operably connected by a drive element 612 (e.g., a drive chain, drive belt, etc.). The first pulley 608 is connected to the turbine 604 by a first drive shaft 614 such that rotation of the turbine 604 will cause rotation of the first pulley 608. As the first pulley 608 is rotated, the drive element 612 will be driven to cause rotation of the second pulley 610. The second pulley 610 is operably connected to the power generators 602 by a second drive shaft 616. As will be appreciated by those of skill in the art, the first drive shaft 614 may be referred to as an input shaft of the continuously variable transmission 606 and the second drive shaft 616 may be referred to as an output shaft of the continuously variable transmission 606. In some embodiments, the second drive shaft 616 may be operably connected to both the electrical generator 602a and the hydraulic pump 602b. In other embodiments, the second drive shaft 616 may be operably connected to the electrical generator 602a, which in turn may be operated to drive operation of the hydraulic pump 602b.

Each of the pulleys 608, 610 may be formed of two cones, as described above, with, for example, a movable cone arranged adjacent to a fixed cone. The drive element 612 may wrap about the cones of each of the pulleys 608, 610 to enable operable connection therebetween. The ratio between the first pulley 608 and the second pulley 610 may be adjusted or controlled. In some embodiments, actuators may be arranged in operable connection with the movable cones of the pulleys 608, 610. Further, in some embodiments, and as shown, the first pulley 608 and/or the first drive shaft 614 may be configured with a clutch 618. The clutch 618 may be configured to enable engagement of the first drive shaft 614 with the first pulley 608 at specific or predefined speeds. As such, the clutch 618 may enable improved start-up efficiency of the turbine (i.e., the driving of the first pulley 608 does not impact the initial rotation of the turbine 604).

The electrical generator 602a may be arranged in electrical communication with one or more components or systems of an aircraft. Accordingly, the electrical generator 602a can be arranged to provide electrical power to such components and/or systems, as will be appreciated by those of skill in the art. During operation of the ram air turbine assembly 600, the rotational speed of the turbine 604 may be variable, and thus the output from such turbine 604 may cause variability in the electrical power generated by the electrical generator 602a. However, because of the inclusion of the continuously variable transmission 606 between the turbine 604 and the electrical generator 602a, the rotational speed input by the turbine 604 at the first pulley 608 can be adjusted, regulated, and/or otherwise controlled such that the output from the second pulley 610 is constrained within a desired range, allowing for consistent and improved tolerance electrical power generation at the electrical generator 602a.

The hydraulic pump 602b may be arranged in hydraulic communication with one or more components or systems of an aircraft. Accordingly, the hydraulic pump 602b can be arranged to provide hydraulic power to such components and/or systems, as will be appreciated by those of skill in the art. During operation of the ram air turbine assembly 600, the rotational speed of the turbine 604 may be variable, and thus the output from such turbine 604 may cause variability in the hydraulic power generated by the hydraulic pump 602b. However, because of the inclusion of the continuously variable transmission 606 between the turbine 604 and the hydraulic pump 602b, the rotational speed input by the turbine 604 at the first pulley 608 can be adjusted, regulated, and/or otherwise controlled such that the output from the second pulley 610 is constrained within a desired range, allowing for consistent and improved tolerance hydraulic power generation at the hydraulic pump 602b.

In some embodiments having both an electrical generator and a hydraulic pump for power generation, the output shaft of the continuously variable transmission may provide a single output rotational speed for both the electrical generator and the hydraulic pump. However, in other embodiments, a gear box may be arranged along the output shaft between the electrical generator and the hydraulic pump to enable a change in rotational speed of the output shaft for the specific power generator. Moreover, although shown as an arrangement of electrical generator upstream from the hydraulic pump, in other embodiments, the hydraulic pump may be arranged upstream from the electrical generator, or a dual shaft arrangement may enable parallel operation instead of series. In some embodiments, a hydraulic pump connected to the ram air turbine may be configured to power an electrical generator. Furthermore, in some embodiments and as shown in FIG. 6, an optional clutch 620 may be arranged on the output shaft such that one or the other of the electrical generator and the hydraulic pump may be operated independently of the other.

In operation, embodiments of the present disclosure enable a variable input at the turbine to be converted into a constant or relatively constant output to enable generation of, for example, constant-frequency electrical power. As will be appreciated by those of skill in the art, the ram air turbine assemblies and systems described herein can provide power (e.g., electric and/or hydraulic) to one or more aircraft components. For example, without limitation, aircraft components that can be powered by the ram air turbine assemblies and systems described herein can include airfoil actuators, ailerons and other flight control surfaces (flaps, slats, etc.), and electrical and/or electronic components, including, but not limited to flight-critical instrumentation, navigation, heaters, and/or communication equipment.

Advantageously, embodiments provided herein enable efficient and controlled power supply for an aircraft during operation of a ram air turbine assemblies for supplemental and/or emergency power generation. The ram air turbine assemblies provide improved power generation through the inclusion of a continuously variable transmission operably arranged between a turbine and a power generator of the ram air turbine assembly. The continuously variable transmission can enable controlled output shaft speed rotation, and thus enable relatively constant and/or controlled power generation. According to the invention, with an electrical generator, the frequency of the electrical power generated has a variation of ±5% or less about a desired power level. This is in contrast to prior ram air turbine assemblies that would generate power having up to 20% variability in electrical frequency output. This benefit may also be realized with systems that generate hydraulic power and/or both hydraulic and electrical power, as described above. By improving the quality (tolerance) of the frequency output from the generator(s) of the ram air turbine assemblies, frequency conditioning elements on the aircraft may be reduced in size or even completely eliminated, thus providing weight and space savings on an aircraft.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the scope of claim 1.

## Claims

1. A power generation system for an aircraft, the power generation system comprising:
at least one aircraft component and
a ram air turbine assembly (200) configured to provide power to the at least one aircraft component, wherein the ram air turbine assembly comprises:
a turbine (204);
a power generator (212) operably connected to the turbine; and
a continuously variable transmission (300) arranged between the turbine (204) and the power generator (212), the continuously variable transmission configured to receive an input rotational speed from the turbine and output a constant output rotation speed to enable power generation at the power generator (212),
wherein the continuously variable transmission (300) is configured to achieve a variable power output of the power generator having a variability of electrical frequency of ±5% or less.

2. The power generation system of claim 1, wherein the continuously variable transmission comprises:
a first drive shaft (414) operably connected to the turbine; and
a second drive shaft (416) operably connected to the power generator.

3. The power generation system of claim 2, further comprising:
a first pulley (408) operably connected to the first drive shaft and configured to be driven by rotation of the turbine;
a second pulley (410) operably connected to the second drive shaft, the second drive shaft operably connected to the power generator; and
a drive element (412) operably connecting the first pulley to the second pulley such that rotation of the first pulley causes rotation of the second pulley.

4. The power generation system of claim 3, wherein at least one of the first pulley (408) and the second pulley (410) comprises two cones (312, 314), wherein the drive element wraps about the two cones, optionally
wherein one of the two cones is fixedly connected to a respective drive shaft and the other of the two cones is movable along the respective drive shaft.

5. The power generation system of claim 3, wherein the drive element is one of an endless chain and a belt.

6. The power generation system of any of any preceding claim, wherein the power generator is an electric power generator.

7. The power generation system of any of claims 1 to 5, wherein the power generator is a hydraulic pump or the power generator includes an electric power generator and a hydraulic power generator.

8. The power generation system of claim 3,, further comprising a clutch (418, 518, 618) configured to enable engagement of the first drive shaft with the first pulley at specific or predefined speeds.

9. The power generation system of any preceding claim, wherein the at least one aircraft component comprises a hydraulic component of the aircraft.

10. The power generation system of any of claims 1 to 8, wherein the at least one aircraft component comprises an electronic component of the aircraft.

11. An aircraft (202) comprising:
at least one aircraft component; and
a ram air turbine assembly (200) configured to provide power to the at least one aircraft component, wherein at least a portion of the ram air turbine assembly is deployable between a stowed position and a deployed position external to the aircraft, wherein the ram air turbine assembly comprises:
a turbine (204), wherein the turbine is positioned in an airstream external to the aircraft when in the deployed position;
a power generator (212) operably connected to the turbine; and
a continuously variable transmission (300) arranged between the turbine (204) and the power generator (212), the continuously variable transmission configured to receive an input rotational speed from the turbine and output a constant output rotation speed to enable power generation at the power generator (212),
wherein the continuously variable transmission (300) is configured to achieve a variable power output of the power generator having a variability of electrical frequency of ±5% or less.

12. The aircraft of claim 11, wherein the continuously variable transmission comprises:
a first drive shaft (414) operably connected to the turbine; and
a second drive shaft (416) operably connected to the power generator.

13. The aircraft of claim 12, further comprising:
a first pulley (408) operably connected to the first drive shaft and configured to be driven by rotation of the turbine;
a second pulley (410) operably connected to the second drive shaft, the second drive shaft operably connected to the power generator; and
a drive element operably connecting the first pulley to the second pulley such that rotation of the first pulley causes rotation of the second pulley, optionally
wherein the drive element is one of an endless chain and a belt.

14. The aircraft of any of claims 11 to 13, wherein the power generator is an electric power generator, or
wherein the power generator is a hydraulic pump, or
wherein the power generator includes an electric power generator and a hydraulic power generator.

15. The aircraft of any of claims 1 to 14, wherein the at least one aircraft component comprises a hydraulic component of the aircraft, or
wherein the at least one aircraft component comprises an electronic component of the aircraft.

## Patentansprüche

1. Leistungserzeugungssystem für ein Luftfahrzeug, wobei das Leistungserzeugungssystem Folgendes umfasst:
mindestens ein Luftfahrzeugbauteil und
eine Stauluftturbinenanordnung (200), die so konfiguriert ist, dass sie dem mindestens einen Luftfahrzeugbauteil eine Leistung bereitstellt, wobei die Stauluftturbinenanordnung Folgendes umfasst:
ein Turbine (204);
einen Leistungsgenerator (212), der wirksam mit der Turbine verbunden ist; und
eine stufenloses Getriebe (300), das zwischen der Turbine (204) und dem Leistungsgenerator (212) angeordnet ist,
wobei das stufenlose Getriebe so konfiguriert ist, dass es eine Eingangsdrehzahl von der Turbine aufnimmt und eine konstante Ausgangsdrehzahl ausgibt, um eine Leistungserzeugung an dem Leistungsgenerator (212) zu ermöglichen,
wobei das stufenlose Getriebe (300) so konfiguriert ist, dass es eine variable Leistungsabgabe des Leistungsgenerators erreicht, die eine Schwankung der elektrischen Frequenz von ±5 % oder weniger aufweist.

2. Leistungserzeugungssystem nach Anspruch 1, wobei das stufenlose Getriebe Folgendes umfasst:
eine erste Antriebswelle (414), die wirksam mit der Turbine verbunden ist; und
eine zweite Antriebswelle (416), die wirksam mit dem Leistungsgenerator verbunden ist.

3. Leistungserzeugungssystem nach Anspruch 2, ferner Folgendes umfassend:
eine erste Rolle (408), die wirksam mit der ersten Antriebswelle verbunden ist und so konfiguriert ist, dass sie durch Rotation der Turbine angetrieben wird;
eine zweite Rolle (410), die wirksam mit der zweiten Antriebswelle verbunden ist, wobei die zweite Antriebswelle wirksam mit dem Leistungsgenerator verbunden ist; und
ein Antriebselement (412), das die erste Rolle wirksam mit der zweiten Rolle verbindet, so dass eine Rotation der ersten Rolle eine Rotation der zweiten Rolle bewirkt.

4. Leistungserzeugungssystem nach Anspruch 3, wobei mindestens eine aus der ersten Rolle (408) und der zweiten Rolle (410) zwei Kegel (312, 314) umfasst, wobei sich das Antriebselement um die zwei Kegel wickelt, optional wobei einer der zwei Kegel starr mit einer jeweiligen Antriebswelle verbunden ist und der andere der zwei Kegel entlang der jeweiligen Antriebswelle beweglich ist.

5. Leistungserzeugungssystem nach Anspruch 3, wobei das Antriebselement eines aus einer Endloskette und einem Riemen ist.

6. Leistungserzeugungssystem nach einem der vorstehenden Ansprüche, wobei der Leistungsgenerator ein elektrischer Leistungsgenerator ist.

7. Leistungserzeugungssystem nach einem der Ansprüche 1 bis 5, wobei der Leistungsgenerator eine Hydraulikpumpe ist oder der Leistungsgenerator einen elektrischen Leistungsgenerator und einen hydraulischen Leistungsgenerator beinhaltet.

8. Leistungserzeugungssystem nach Anspruch 3, ferner eine Kupplung (418, 518, 618) umfassend, die so konfiguriert ist, dass sie einen Eingriff der ersten Antriebswelle mit der ersten Rolle bei bestimmten oder vordefinierten Drehzahlen ermöglicht.

9. Leistungserzeugungssystem nach einem der vorstehenden Ansprüche, wobei das mindestens eine Luftfahrzeugbauteil ein hydraulisches Bauteil des Luftfahrzeugs umfasst.

10. Leistungserzeugungssystem nach einem der Ansprüche 1 bis 8, wobei das mindestens eine Luftfahrzeugbauteil ein elektronisches Bauteil des Luftfahrzeugs umfasst.

11. Luftfahrzeug (202), umfassend:
mindestens ein Luftfahrzeugbauteil; und
eine Stauluftturbinenanordnung (200), die so konfiguriert ist, dass sie dem mindestens einen Luftfahrzeugbauteil eine Leistung bereitstellt, wobei mindestens ein Abschnitt der Stauluftturbinenanordnung zwischen einer Verstauposition und einer ausgefahrenen Position außerhalb des Luftfahrzeugs ausgefahren werden kann, wobei die Stauluftturbinenanordnung Folgendes umfasst:
eine Turbine (204), wobei die Turbine in einem Luftstrom außerhalb des Luftfahrzeugs angeordnet ist, wenn sie sich in der ausgefahrenen Position befindet;
einen Leistungsgenerator (212), der wirksam mit der Turbine verbunden ist; und
ein stufenloses Getriebe (300), das zwischen der Turbine (204) und dem Leistungsgenerator (212) angeordnet ist,
wobei das stufenlose Getriebe so konfiguriert ist, dass es eine Eingangsdrehzahl von der Turbine aufnimmt und eine konstante Ausgangsdrehzahl ausgibt, um eine Leistungserzeugung an dem Leistungsgenerator (212) zu ermöglichen,
wobei das stufenlose Getriebe (300) so konfiguriert ist, dass es eine variable Leistungsabgabe des Leistungsgenerators erreicht, die eine Schwankung der elektrischen Frequenz von ±5 % oder weniger aufweist.

12. Luftfahrzeug nach Anspruch 11, wobei das stufenlose Getriebe Folgendes umfasst:
eine erste Antriebswelle (414), die wirksam mit der Turbine verbunden ist; und
eine zweite Antriebswelle (416), die wirksam mit dem Leistungsgenerator verbunden ist.

13. Luftfahrzeug nach Anspruch 12, ferner Folgendes umfassend:
eine erste Rolle (408), die wirksam mit der ersten Antriebswelle verbunden ist und so konfiguriert ist, dass sie durch Rotation der Turbine angetrieben wird;
eine zweite Rolle (410), die wirksam mit der zweiten Antriebswelle verbunden ist, wobei die zweite Antriebswelle wirksam mit dem Leistungsgenerator verbunden ist; und
ein Antriebselement, das wirksam die erste Rolle mit der zweiten Rolle verbindet, so dass eine Rotation der ersten Rolle eine Rotation der zweiten Rolle bewirkt, optional
wobei das Antriebselement eines aus einer Endloskette und einem Riemen ist.

14. Luftfahrzeug nach einem der Ansprüche 11 bis 13, wobei der Leistungsgenerator ein elektrischer Leistungsgenerator ist, oder
wobei der Leistungsgenerator eine Hydraulikpumpe ist, oder wobei der Leistungsgenerator einen elektrischen Leistungsgenerator und einen hydraulischen Leistungsgenerator beinhaltet.

15. Luftfahrzeug nach einem der Ansprüche 1 bis 14, wobei das mindestens eine Luftfahrzeugbauteil ein hydraulisches Bauteil des Luftfahrzeugs umfasst, oder
wobei das mindestens eine Luftfahrzeugbauteil ein elektronisches Bauteil des Luftfahrzeugs umfasst.

## Revendications

1. Système de génération d'énergie pour un aéronef, le système de génération d'énergie comprenant :
au moins un composant d'aéronef et
un ensemble turbine à air dynamique (200) configuré pour fournir de l'énergie à l'au moins un composant d'aéronef, dans lequel l'ensemble turbine à air dynamique comprend :
une turbine (204) ;
un générateur d'énergie (212) relié de manière fonctionnelle à la turbine ; et
une transmission variable continue (300) agencée entre la turbine (204) et le générateur d'énergie (212), la transmission variable continue étant configurée pour recevoir une vitesse de rotation d'entrée de la turbine et délivrer une vitesse de rotation de sortie constante pour permettre la génération d'énergie au niveau du générateur d'énergie (212),
dans lequel la transmission variable continue (300) est configurée pour obtenir une sortie d'énergie variable du générateur d'énergie ayant une variabilité de fréquence électrique de ±5 % ou moins.

2. Système de génération d'énergie selon la revendication 1, dans lequel la transmission variable continue comprend :
un premier arbre d'entraînement (414) relié de manière fonctionnelle à la turbine ; et
un second arbre d'entraînement (416) relié de manière fonctionnelle au générateur d'énergie.

3. Système de génération d'énergie selon la revendication 2, comprenant en outre :
une première poulie (408) reliée de manière fonctionnelle au premier arbre d'entraînement et configurée pour être entraînée par la rotation de la turbine ;
une seconde poulie (410) reliée de manière fonctionnelle au second arbre d'entraînement, le second arbre d'entraînement étant relié de manière fonctionnelle au générateur d'énergie ; et
un élément d'entraînement (412) reliant de manière fonctionnelle la première poulie à la seconde poulie de sorte que la rotation de la première poulie entraîne la rotation de la seconde poulie.

4. Système de génération d'énergie selon la revendication 3, dans lequel au moins l'une de la première poulie (408) et de la seconde poulie (410) comprend deux cônes (312, 314), dans lequel l'élément d'entraînement s'enroule autour des deux cônes, éventuellement
dans lequel l'un des deux cônes est relié de manière fixe à un arbre d'entraînement respectif et l'autre des deux cônes est mobile le long de l'arbre d'entraînement respectif.

5. Système de génération d'énergie selon la revendication 3, dans lequel l'élément d'entraînement est l'une d'une chaîne sans fin et d'une courroie.

6. Système de génération d'énergie selon une quelconque selon une quelconque revendication précédente, dans lequel le générateur d'énergie est un générateur d'énergie électrique.

7. Système de génération d'énergie selon l'une quelconque des revendications 1 à 5, dans lequel le générateur d'énergie est une pompe hydraulique ou le générateur d'énergie comporte un générateur d'énergie électrique et un générateur d'énergie hydraulique.

8. Système de génération d'énergie selon la revendication 3, comprenant en outre un embrayage (418, 518, 618) configuré pour permettre la mise en prise du premier arbre d'entraînement avec la première poulie à des vitesses spécifiques ou prédéfinies.

9. Système de génération d'énergie selon une quelconque revendication précédente, dans lequel l'au moins un composant d'aéronef comprend un composant hydraulique de l'aéronef.

10. Système de génération d'énergie selon l'une quelconque des revendications 1 à 8, dans lequel l'au moins un composant d'aéronef comprend un composant électronique de l'aéronef.

11. Aéronef (202) comprenant :
au moins un composant d'aéronef ; et
un ensemble turbine à air dynamique (200) configuré pour fournir de l'énergie à l'au moins un composant d'aéronef, dans lequel au moins une partie de l'ensemble turbine à air dynamique est déployable entre une position repliée et une position déployée à l'extérieur de l'aéronef, dans lequel l'ensemble turbine à air dynamique comprend :
une turbine (204), dans lequel la turbine est positionnée dans un flux d'air à l'extérieur de l'aéronef lorsqu'elle est dans la position déployée ;
un générateur d'énergie (212) relié de manière fonctionnelle à la turbine ; et
une transmission variable continue (300) agencée entre la turbine (204) et le générateur d'énergie (212), la transmission variable continue étant configurée pour recevoir une vitesse de rotation d'entrée de la turbine et délivrer une vitesse de rotation de sortie constante pour permettre la génération d'énergie au niveau du générateur d'énergie (212),
dans lequel la transmission variable continue (300) est configurée pour obtenir une sortie d'énergie variable du générateur d'énergie ayant une variabilité de fréquence électrique de ±5 % ou moins.

12. Aéronef selon la revendication 11, dans lequel la transmission variable continue comprend :
un premier arbre d'entraînement (414) relié de manière fonctionnelle à la turbine ; et
un second arbre d'entraînement (416) relié de manière fonctionnelle au générateur d'énergie.

13. Aéronef selon la revendication 12, comprenant en outre :
une première poulie (408) reliée de manière fonctionnelle au premier arbre d'entraînement et configurée pour être entraînée par la rotation de la turbine ;
une seconde poulie (410) reliée de manière fonctionnelle au second arbre d'entraînement, le second arbre d'entraînement étant relié de manière fonctionnelle au générateur d'énergie ; et
un élément d'entraînement reliant de manière fonctionnelle la première poulie à la seconde poulie de sorte que la rotation de la première poulie entraîne la rotation de la seconde poulie, éventuellement
dans lequel l'élément d'entraînement est l'une d'une chaîne sans fin et d'une courroie.

14. Aéronef selon l'une quelconque des revendications 11 à 13, dans lequel le générateur d'énergie est un générateur d'énergie électrique, ou
dans lequel le générateur d'énergie est une pompe hydraulique, ou
dans lequel le générateur d'énergie comporte un générateur d'énergie électrique et un générateur d'énergie hydraulique.

15. Aéronef selon l'une quelconque des revendications 1 à 14, dans lequel l'au moins un composant d'aéronef comprend un composant hydraulique de l'aéronef, ou
dans lequel l'au moins un composant d'aéronef comprend un composant électronique de l'aéronef.
